Europäisches Patentamt

European Patent Office

Office européen des brevets

(11) Veröffentlichungsnummer: **0 131 755 B1**

# (12) EUROPÄISCHE PATENTSCHRIFT

(45) Veröffentlichungstag der Patentschrift:
**07.10.87**

(21) Anmeldenummer: **84106696.2**

(22) Anmeldetag: **12.06.84**

(51) Int. Cl.⁴: **B 08 B 1/04,** G 21 C 13/06

(54) Reinigungsgerät für die Dichtflächen eines Behälters.

(30) Priorität: **22.06.83 DE 3322454**

(43) Veröffentlichungstag der Anmeldung:
**23.01.85 Patentblatt 85/4**

(45) Bekanntmachung des Hinweises auf die Patenterteilung:
**07.10.87 Patentblatt 87/41**

(84) Benannte Vertragsstaaten:
**CH DE FR LI**

(56) Entgegenhaltungen:
**FR - A - 2 512 358**

(73) Patentinhaber: **Siemens Aktiengesellschaft Berlin und München, Wittelsbacherplatz 2, D-8000 München 2 (DE)**

(72) Erfinder: **Regnet, Günther, Bucher Strasse 117, D-8500 Nürnberg (DE)**
Erfinder: **Harrer, Josef, Herrnstrasse 14, D-8550 Forchheim (DE)**
Erfinder: **Lüdke, Lothar, Gebbertstrasse 148, D-8520 Erlangen (DE)**
Erfinder: **Weber, Robert, Esperstrasse 23, D-8525 Uttenreuth (DE)**

## Beschreibung

Die Erfindung bezieht sich auf ein Reinigungsgerät für die Dichtflächen eines Behälters; wobei eine Reinigungseinheit von einem verfahrbaren Wagen getragen wird, das bei Wartungsarbeiten an Grossbehältern einsetzbar sein soll.

An den Dichtflächen von Behältern, insbesondere von Reaktordruckbehältern, wie auch von anderen Grossbehältern der chemischen Verfahrenstechnik setzen sich im Laufe des Betriebes am Rand der Dichtung Verunreinigungen ab. Bei der Wartung des Behälters, wenn der auf der Dichtfläche aufliegende Deckel oder Flansch abgenommen wird, müssen diese Ablagerungen entfernt werden, um beim erneuten Aufsetzen des Deckels oder Flanchs, wenn dieser – was unvermeidlich ist – geringfügig gegenüber dem ursprünglichen Sitz verschoben aufgesetzt wird, trotzdem einen dichten Sitz zu bekommen. Bei Behältern der chemischen Verfahrenstechnik sowie bei Reaktordruckbehältern ist es bekannt, in solchen Fällen die Dichtungsrückstände und Ablagerungen auf den Dichtflächen manuell zu entfernen. Dies ist eine bei grossen Behältern zeitraubende Arbeit. Bei Reaktordruckbehältern kommt die hohe Strahlenbelastung, der die Arbeiter ausgesetzt sind, noch als weiteres Erschwernis hinzu. Das hat zur Folge, dass die Verweildauer der diese Wartungsarbeiten durchführenden Person am Reaktordruckbehälter schon aus Gründen des Strahlenschutzes begrenzt ist. Ausserdem müssen die Arbeiten an den Dichtflächen eines Reaktordruckbehälters mit Vollschutzanzügen durchgeführt werden, was für sich alleine schon eine erhebliche Arbeitsbelastung darstellt.

Aus der FR-A-25 12 358 ist eine Vorrichtung zum Reinigen der Dichtfläche eines Mannlochrandes bekannt, die eine motorisch, vorzugsweise mittels eines Pressluftmotors, angetriebene und in radialer Richtung verstellbare Reinigungsbürste aufweist, deren Borsten an einer ringförmig das Mannloch umgebenden zu reinigenden Dichtungsfläche anliegen. Die Reinigungsbürste ist dabei an einem umlaufenden Schwenkarm befestigt, der verschiebbar gelagert und mittels eines Hubzylinders zu bewegen ist. Um die Reinigungsvorrichtung an das betreffende Mannloch heranzuführen, kann sie mittels einer Tragplatte an einem beliebig verfahrbaren Wagen angeordnet sein. Durch Betätigen einer zum Wagen gehörenden Steuereinrichtung kann sie an das Mannloch angesetzt und fixiert werden. Nach einer anderen Gestaltung ist das Reinigungsgerät an einem um das Mannloch umlaufenden Tragring bewegbar angeordnet. Bei diesen bekannten Ausführungen sind zum Anbringen und Fixieren verhältnismässig aufwendige Vorrichtungen erforderlich. Das Heranfahren der Reinigungsvorrichtung mit einem Wagen und das Ansetzen und Fixieren mittels einer Steuereinrichtung ist beispielsweise dort nicht möglich, wo man die Dichtfläche eines Behälters nur mit einem Kran erreichen kann.

Der Erfindung liegt die Aufgabe zugrunde, einen Weg zu weisen, wie sich bei einer Verminderung des Strahlenrisikos für die Arbeiter bei der Reinigung der Dichtflächen eines Reaktordruckbehälters die Reinigung von Dichtflächen von grossen Behältern bei der Wartung beschleunigen und verbilligen lässt.

Diese Aufgabe wird bei einem Reinigungsgerät der eingangs genannten Art erfindungsgemäss dadurch gelöst, dass der Wagen fernsteuerbar ist und längs der Dichtflächen verfahrbar ist. Hierdurch wird die exakte Führung der Reinigungseinheit in konstantem Abstand von der Oberfläche der Dichtfläche sichergestellt und eine wichtige Voraussetzung für die Führung schwerer Reinigungseinheiten längs der Dichtfläche geschaffen. Darüberhinaus wird hierdurch die Basis für verschiedene erfinderische Ausgestaltungen des Reinigungsgerätes bereitgestellt.

In besonders zweckmässiger Ausgestaltung der Erfindung kann der Wagen auf der Dichtfläche mittels Räder verfahrbar sein, die auf einen Laufradius eingestellt sind, der etwas grösser ist als der Radius der Behälterdichtfläche und über zwei Führungszapfen an der Innenseite der Behälterwand geführt sein. Hierdurch wird sichergestellt, dass der Wagen mit seinen Rädern exakt und zuverlässig auf der Dichtfläche, aber ausserhalb des Dichtbereiches entlang läuft, ohne seitlich nach innen oder aussen von der Dichtfläche herabzustürzen und ohne dass vorher besondere Führungsschienen oder Leisten am Behälter angebracht werden müssten.

Der Antrieb für den Wagen und der Antrieb für die Reinigungseinheit sind vorteilhafterweise Elektromotoren.

In zweckmässiger Ausgestaltung der Erfindung kann die Reinigungseinheit mindestens einen federnd gegen die Dichtfläche angedrückten, antreibbaren Schleifpolierkörper besitzen. Hierdurch wird ein elastisches Wegschleifen von Verunreinigungen gewährleistet, ohne dass dadurch das Reinigungsgerät an kleineren Unebenheiten oder Verunreinigungen hängen bleiben kann.

Weitere Einzelheiten der Erfindung werden anhand eines in den Figuren dargestellten Ausführungsbeispiels erläutert. Es zeigen:

Fig. 1 einen Längsschnitt durch ein auf der Dichtfläche eines Behälters stehendes Reinigungsgerät.

Fig. 2 einen Schnitt längs der Linie II–II der Figur 1 und

Fig. 3 einen Schnitt längs der Linie III–III der Figur 1.

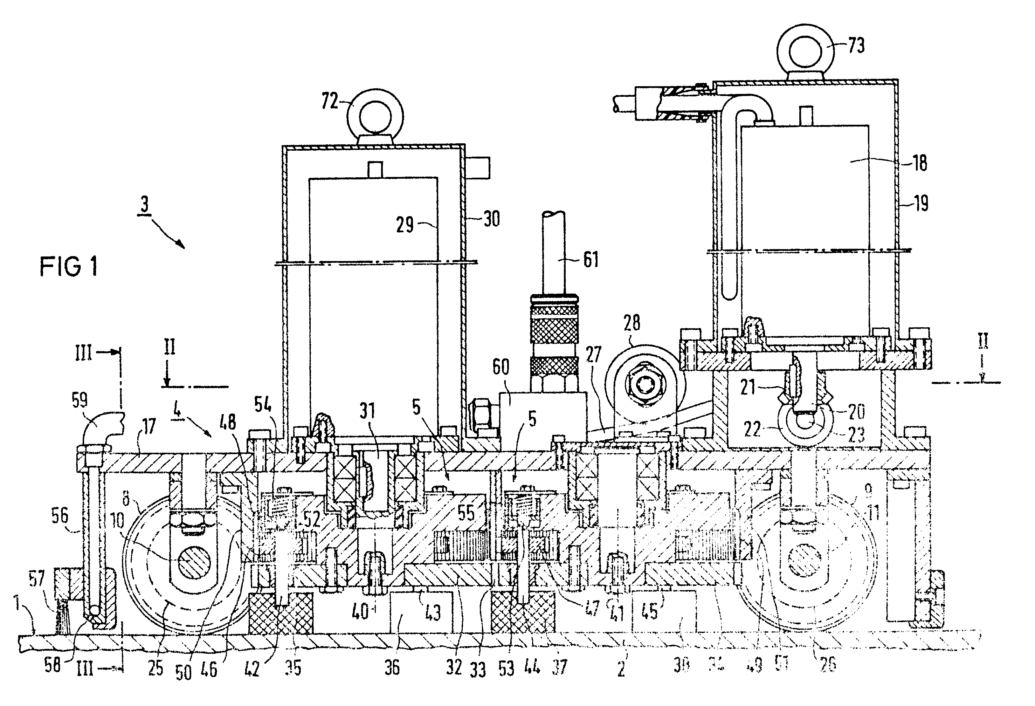

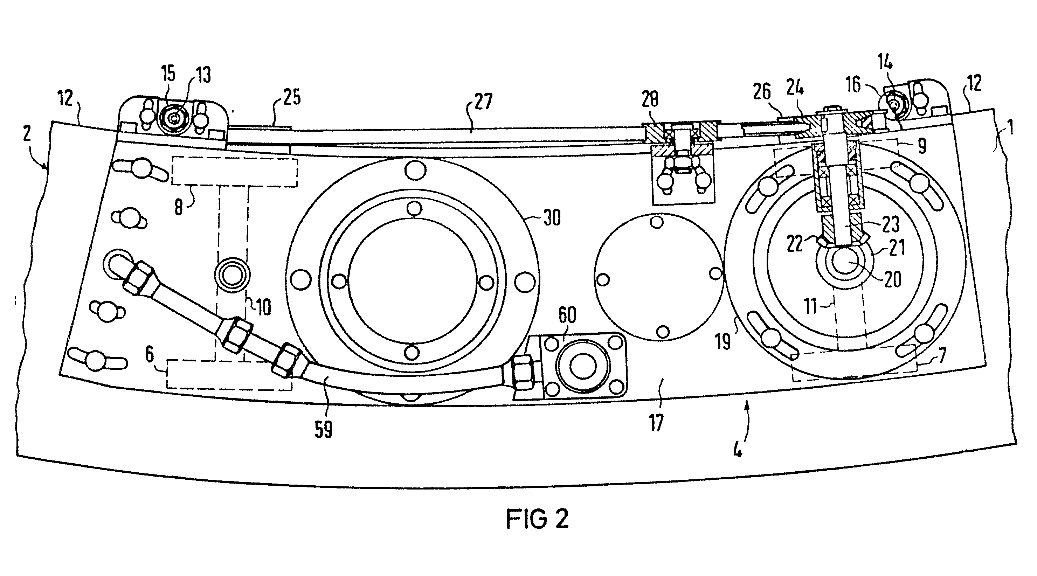

Die Figur 1 lässt den inneren Aufbau eines auf der Dichtfläche 1 eines Reaktordruckbehälters 2 stehenden Reinigungsgerätes 3 erkennen. Als wesentliche Baugruppen des Reinigungsgerätes 3 sind ein auf der zu reinigenden Dichtfläche verfahrbarer Wagen 4 und eine in den Wagen eingebaute Reinigungseinheit 5 zu nennen. Der Wagen 5 ist mittels vier Räder 6, 7, 8, 9 auf der Dichtfläche 2 beidseitig des Bereichs in dem die Dichtung des Deckels aufliegt verfahrbar. In der Draufsicht der Figur 2 ist leicht zu erkennen, dass die beiden Achsen 10, 11 des Wagens 4 leicht gegeneinander geschwenkt und beinahe parallel zum Radius des Randes 12 der Dichtfläche ausgerichtet sind. Auf der der Innenseite des Reaktordruckbehälters 2 zugewandten Seite des Wagens 4 sind an dessen beiden Enden je ein senkrecht zur Dichtfläche 1 ausgerichteter Führungszapfen 13, 14 befestigt, die beide einige Zentimeter über die Dichtfläche 1 hinaus ins Innere des Reaktordruckbehälters 2 ragen und dort mit je einem mit der Innenwandung des Reaktordruckbehälters in Eingriff bringbare Kugellager 15, 16 versehen sind. Auf der Abdeckplatte 17 des Wagens 14 ist, wie die Figur 1 zeigt, ein Antriebsmotor 18 für den Wagen 4 aufgeflanscht. Er ist in einem wasserdichten Gehäuse 19 untergebracht. Seine Welle 20 ist über zwei Kegelzahnräder 21, 22 und eine horizontale Achse 23 mit einer seitlich des Wagens über einem der Räder des Wagens drehbar gelagerten Keilriemenscheibe 24 gekuppelt. Diese Keilriemenscheibe ist in derselben Ebene angeordnet, wie zwei weitere Keilriemenscheiben 25, 26, die eine jede aussen auf einem der beiden der Innenseite des Reaktordruckbehälters 2 zugewandten Rädern 8, 9 aufgeschraubt sind. Diese drei Keilriemenscheiben 24, 25, 26 werden von einem endlosen Keilriemen 27 umschlungen, der ausserdem noch an einer Spannrolle 28 anliegt.

Auf der oberen Abdeckplatte 17 des Wagens 4 ist ausserdem ein weiterer Antriebsmotor 29 für die Reinigungseinheit 5 zu erkennen, der ebenfalls in einem wasserdichten Gehäuse 30 untergebracht ist. Dessen vertikale Antriebswelle 31 ist durch die Abdeckplatte 17 des Wagens hindurchgeführt und trägt einen im Zwischenraum zwischen den beiden Achsen 10, 11 befindlichen Scheibenkörper 32. Dieser Scheibenkörper ist an seinem äusseren Umfang mit einer Verzahnung 33 versehen, die mit derjenigen eines zweiten Scheibenkörpers 34 kämmt. Die beiden Scheibenkörper tragen an ihrem Umfang je drei um 120° gegeneinander versetzte Schleifpolierkörper 35, 36, 37, 38, 39 (nur fünf dargestellt), die am Scheibenkörper um je eine vertikale, parallel zur Scheibenkörperachse 40, 41 ausgerichtete Achse 42, 43, 44, 45 drehbar gelagert sind. Die Achsen dieser Schleifpolierkörper tragen je ein kleines Zahnritzel 46, 47, das mit der Innenverzahnung 48, 49 je einer konzentrisch zum jeweiligen Scheibenkörper 32, 34 ausgerichteten am Wagen befestigten Dose 50, 51 kämmt. Die Achsen 42, 43, 44, 45 der Schleifpolierkörper 35, 36, 37, 38, 39 liegen mit ihrem vom Schleifpolierkörper abgewandten Ende an je einem Druckkörper 52, 53 an, der durch eine im Scheibenkörper 32, 34 gehaltere Druckfeder 54, 55 gegen diese Achse 42, 43, 44, 45 gepresst wird.

An der in Fahrtrichtung vorderen Stirnseite des Wagens 4 ist eine Schmutzabweiserplatte 56 befestigt, die bis unmittelbar über die Dichtfläche 1 reicht. Diese Schmutzabweiserplatte trägt an ihrem der Dichtfläche zugewandten Ende einen elastischen gegen die Dichtfläche gedrückten Schaber 57. Die Schmutzabweiserplatte ist innen aufgebohrt und trägt an ihrem dem Schaber zugewandten Rand eine Sprühdüse 58. Diese ist über eine Rohrleitung 59 an einem auf der Abdeckplatte 17 des Wagens 4 befestigten Kupplungsstück 60 für einen Druckwasseranschluss befestigt. An diesem Kupplungsstück 60 ist ein Druckwasserschlauch 61 über einen Schnellverschluss anschliessbar. Weitere, hier nicht dargestellte Sprühdüsen sind unterhalb der Abdeckplatte 17 des Wagens, seitlich zwischen den beiden Scheibenkörpern 32, 34, unmittelbar über der dichtfläche auf den Schleifbereich der Schleifpolierkörper 35, 36, 37, 38, 39 ausgerichtet gehaltert.

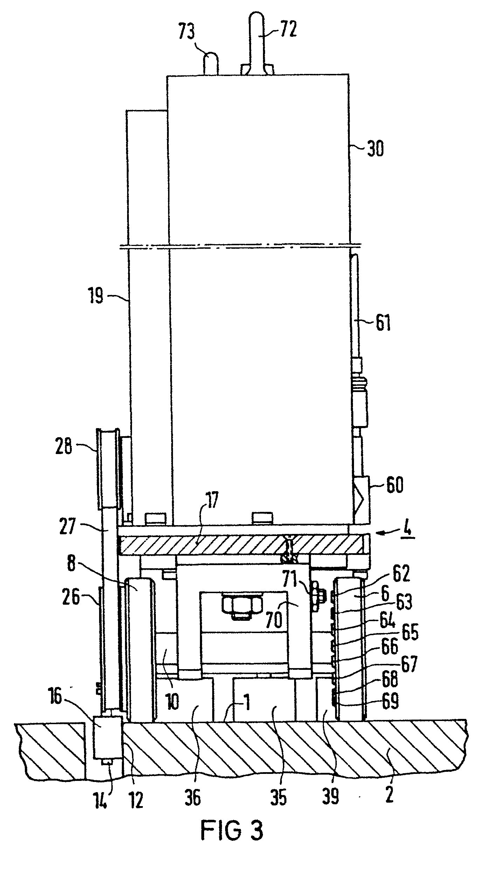

Eines der freilaufenden Räder 6 (Fig. 3) ohne Keilriemenscheibe trägt an seinem inneren Umfang in äquidistanten Abstand lauter kleine Permanentmagnete 62, 63, 64, 65, 66, 67, 68, 69. An dem zugehörigen Achsträger 70 ist unmittelbar gegenüber diesen Permanentmagneten ein induktiver Geber 71 befestigt. Die Gehäuse 19, 30 der beiden Antriebsmotore 18, 29 tragen Ösen 72, 73, an denen das Reinigungsgerät hochgehoben werden kann. An der vorderen und hinteren Stirnfläche des Wagens 4 ist ausserdem je eine Halterung (der Übersichtlichkeit halber nicht dargestellt) für eine Fernsehkamera nebst Beleuchtung vorgesehen.

Wurde der Deckel eines Reaktordruckbehälters 2 zur Inspektion geöffnet, so muss zuvor der gesamte oberhalb des Reaktordruckbehälters befindliche Hohlraum geflutet werden, um die Strahlbelastung für das Wartungspersonal so weit als möglich abzusenken. Vor dem erneuten Aufsetzen des Deckels, nach Abschluss der Wartungsarbeiten, müssen die alten Ablagerungsreste der Dichtfläche entfernt werden, weil sie sonst Undichtigkeiten verursachen können. Hierzu kann nun das an den Ösen 72, 73 der Gehäuse 19, 30 der Antriebsmotoren 18, 29 an einem Sicherungsfangseil aufgehängte Reinigungsgerät von einer Arbeitsbühne aus auf die Dichtfläche des Reaktordruckbehälterrandes herabgelassen werden. Dabei kann der oberhalb des Reaktordruckbehälters befindliche Raum geflutet bleiben.

Wird der Antriebsmotor 18 für den Wagen 4 des Reinigungsgerätes 3 eingeschaltet, so treibt dieser die Keilriemenscheibe 24 an und werden über den Keilriemen 27 die beiden inneren Antriebsräder 8, 9 des Wagens angetrieben. Der Wagen setzt sich auf der Dichtfläche des Reaktordruckbehälters 2 in Bewegung. Weil die beiden Achsen 10, 11 des Wagens 4 aus ihrer paralleln Ausrichtung heraus beinahe parallel zum Radius der Dichtfläche 1 geschwenkt sind, würde der freilaufende Wagen einen Kreisbogen fahren, der etwas grösser ist als der Radius der Dichtfläche. Dies hat zur Folge, dass der Wagen 4 auf der Dichtfläche solange nach aussen läuft, bis die beiden senkrechten Führungszapfen 13, 14 mit ihren Kugellagern 15, 16 mit der Behälterinnenwand in Eingriff gelangen. Nunmehr wird der Wagen durch diese Führungszapfen längs der Innenkante des Reaktordruckbehälters geführt, wobei die auf der Dichtfläche beidseitig des eigentlichen Dichtbereiches rollenden Räder 6, 7, 8, 9 des Wagens 4 die Kugellager 15, 16 der Führungszapfen 13, 14 an die Behälterinnenwand drücken. Hieraus ergibt sich eine definierte Führung des Wagens auf der Dichtfläche, bei der die Räder beidseitig der Zone rollen, in der später die Dichtung des Deckels zur Auflage kommt, ohne dass separate Führungsschienen vorgesehen werden müssten.

Beim Abrollen auf der Dichtfläche 1 werden auch die nicht angetriebenen äusseren Räder 6, 7 des Wagens mitgedreht. Die auf dem einen äusseren Rad 6 montierten kleinen Permanentmagnete 63, 64, 65, 66, 67, 68, 69 induzieren beim Drehen dieses Rades in dem auf dem Achsträger 70 montierten induktiven Geber 71 Signale. Diese Signale können in einem entfernt angeordneten Überwachunsgerät (nicht dargesellt) empfangen werden. Sie sind ein sicheres Indiz dafür, dass der Wagen fährt und nicht etwa an einem Hindernis hängengeblieben ist. Über eine Schaltlogik kann der Antriebsmotor 29 für die Reinigungseinheit 5 beim Ausbleiben dieser Signale abgeschaltet werden. Hierdurch wird verhindert, dass die Schleifpolierkörper 35 bis 39 bei stehendem Wagen 4 in die Dichtfläche Riefen einschleifen könnten.

Der Antriebsmotor 29 für die Reinigungseinheit 5 treibt mit seiner Welle unmittelbar den einen der beiden Scheibenkörper 32 an. Über die Aussenverzahnung dieses Scheibenkörpers wird der zweite Scheibenkörper 34 mitgenommen. Die am Umfang der beiden Scheibenkörper gelagerten Schleifpolierkörper werden dabei mit ihren Achsen 42 bis 45 im Kreis mitgeführt. Die auf den Achsen der Schleifpolierkörper befestigten Zahnritzen 46, 47 wälzen sich dabei an der Innenverzahnung 48, 49 der an der Abdeckplatte 17 des Wagens 4 befestigten Dosen 50, 51 ab. Das führt dazu, dass die Schleifpolierkörper während der Rotation der Scheibenkörper um diese herumgeschwenkt werden und sich dabei um ihre eigene Achse drehen. Zugleich werden die Schleifpolierkörper durch die im Scheibenkörper befestigte, sich an den Druckkörper 52, 53 abstützenden Druckfeder 54, 55 gegen den Untergrund, im vorliegenden Fall gegen die Dichtfläche des Reaktorbehälters gepresst.

Der Schaber 57 an der vorderen Stirnkante des Wagens 4 kratzt grobe, nicht zu festsitzende Verunreinigungen von der Dichtfläche ab. Durch das über die Sprühdüsen 58 auf die Dichtfläche strömende Wasser werden lose Schmutzpartikel sowie abgeschliffene Verunreinigungen weggespült. Auch wird so bei nicht gefluteter Dichtfläche für eine ausreichende Spülung des Bereichs gesorgt, an dem die Schleifpolierkörper entlang geführt werden. Über je eine an den hier nicht weiter dargestellten Halterungen an den beiden Stirnflächen des Wagens 4 befestigte Fernsehkamera kann das Bedienungspersonal im strahlengeschützten Kontrollraum den Zustand der Dichtfläche und den Erfolg des Reinigungsprozesses verfolgen.

Bezugszeichenliste

| Dichtfläche | 1 |
| Reaktordruckbehälter | 2 |
| Reinigungsgerät | 3 |
| Wagen | 4 |
| Reinigungseinheit | 5 |
| Rad | 6, 7, 8, 9 |
| Achse | 10, 11 |
| Rand der Dichtfläche | 12 |
| Führungszapfen | 13, 14 |
| Kugellager | 15, 16 |
| Abdeckplatte | 17 |
| Antriebsmotor | 18 |
| Wasserdichtes Gehäuse | 19 |
| Welle | 20 |
| Kegelzahnrad | 21, 22 |
| Horizontale Achse | 23 |
| Keilriemenscheibe | 24 |
| Keilriemenscheibe | 25, 26 |
| Keilriemen | 27 |
| Spannrolle | 28 |
| Antriebsmotor | 29 |
| Wasserdichtes Gehäuse | 30 |
| Antriebswelle | 31 |
| Scheibenkörper | 32, 34 |
| Verzahnung | 33 |
| Schleifpolierkörper | 35, 36, 37, 38, 39 |
| Scheibenkörperachse | 40, 41 |
| Achse | 42, 43, 44, 45 |
| Zahnritzel | 46, 47 |
| Innenverzahnung | 48, 49 |
| Dose | 50, 51 |
| Druckkörper | 52, 53 |
| Druckfeder | 54, 55 |
| Schmutzabweiserplatte | 56 |
| Schaber | 57 |
| Sprühdüse | 58 |
| Rohrleitung | 59 |
| Kupplungsstück | 60 |
| Druckwasserschlauch | 61 |
| Permanentmagnet | 62, 63, 64, 65, 66, 67, 68, 69 |
| Achsträger | 70 |
| Induktive Geber | 71 |
| Öse | 72, 73 |

**Patentansprüche**

1. Reinigungsgerät (3) für die Dichtflächen (1) eines Behälters wobei eine Reinigungseinheit (5) von einem verfahrbaren Wagen (4) getragen wird, dadurch gekennzeichnet, dass der Wagen (4) fernsteuerbar ist und längs der Dichtflächen (1) verfahrbar ist.

2. Reinigungsgerät nach Anspruch 1, dadurch gekennzeichnet, dass der Wagen (4) auf der Dichtfläche (1) mittels Räder (6, 7, 8, 9) verfahrbar ist, die auf einen Laufradius eingestellt sind, der etwas grösser ist als der Radius der Dichtfläche (1) des Behälters und über zwei Führungszapfen (13, 14) an der Innenseite der Behälterwand geführt ist.

3. Reinigungsgerät nach Anspruch 1, dadurch gekennzeichnet, dass die Reinigungseinheit (5) mindestens einen federnd gegen die Dichtfläche (1) angedrückten antreibbaren Schleifpolierkörper (35, 36, 37, 38, 39) besitzt.

4. Reinigungsgerät nach Anspruch 1, dadurch gekennzeichnet, dass der Wagen (4) über einen eigenen elektromotorischen Antrieb (18) verfügt.

5. Reinigungsgerät nach Anspruch 1, dadurch gekennzeichnet, dass die Reinigungseinheit (5) über einen eigenen elektromotorischen Antrieb (29) verfügt.

6. Reinigungsgerät nach Anspruch 5, dadurch gekennzeichnet, dass der elektromotorische Antrieb (29) der Reinigungseinheit (5) nur bei gleichzeitiger Verschiebung des Wagens (4) längs der Dichtfläche (1) einschaltbar ist.

7. Reinigungsgerät nach Anspruch 3, dadurch gekennzeichnet, dass mindestens ein freilaufendes Rad (6) des Wagens (4) mit einem Fühler (62 bis 69, 71) für den Vorschub des Wagens ausgerüstet ist.

8. Reinigungsgerät nach Anspruch 3, dadurch gekennzeichnet, dass der Schleifpolierkörper (35 bis 39) bei planer Dichtfläche (1) um eine senkrecht zur Dichtfläche ausgerichtete Achse (42, 43, 44, 45) drehbar ist.

9. Reinigungsgerät nach Anspruch 8, dadurch gekennzeichnet, dass der Schleifpolierkörper (35 bis 39) auf einem um eine senkrecht zur Dichtfläche (1) ausgerichtete Achse drehbaren Scheibenkörper (32, 34) exzentrisch gelagert ist.

10. Reinigunsgerät nach Anspruch 9, dadurch gekennzeichnet, dass der Schleifpolierkörper (35 bis 39) auf dem Scheibenkörper (32, 34) drehbar gelagert ist.

11. Reinigungsgerät nach Anspruch 9, dadurch gekennzeichnet, dass am Wagen (4) mehrere miteinander gekuppelte, elektrisch angetriebene Scheibenkörper (32, 34) drehbar gelagert sind und jeder Scheibenkörper mehrere durch die Relativbewegung zwischen Wagen (4) und Scheibenkörper angetriebene Schleifpolierkörper (35 bis 39) besitzt.

12. Reinigungsgerät nach Anspruch 1, dadurch gekennzeichnet, dass am Wagen (4) auf die Dichtfläche ausgerichtete Sprühdüsen (58) für Spülwasser vorgesehen sind.

13. Reinigungsgerät nach Anspruch 1, dadurch gekennzeichnet, dass der Wagen (4) einen Schmutzabweiser (56) an seiner in Antriebsrichtung vorderen Kante trägt.

14. Reinigungsgerät nach Anspruch 4 und 5, dadurch gekennzeichnet, dass die elektromotorischen Antriebe (18, 29) gekapselt und für Unterwasserbetrieb ausgerüstet sind.

15. Reinigungsgerät nach Anspruch 1, dadurch gekennzeichnet, dass der Wagen (4) mit einer Halterung für eine Unterwasserkamera ausgerüstet ist.

16. Reinigungsgerät nach Anspruch 1, dadurch gekennzeichnet, dass der Wagen (4) über ein oberhalb der Dichtfläche (1) aufgehängtes Seil gegen Absturz sicherbar ist.

17. Reinigungsgerät nach Anspruch 13, dadurch gekennzeichnet, dass am Schmutzabweiser (56) ein elastisch an die Dichtfläche (1) anpressbarer Schaber (57) befestigt ist.

**Revendications**

1. Appareil de nettoyage (3) des surfaces d'étanchéité (1) d'une cuve, dans lequel une unité de nettoyage (5) est portée par un chariot (4) déplaçable caractérisé en ce que le chariot (4) peut être télécommandé et peut être déplacé le long des surfaces d'étanchéité (1).

2. Appareil de nettoyage suivant la revendication 1, caractérisé en ce que le chariot (4) peut être déplacé sur la surface d'étanchéité (1) au moyen de roues (6, 7, 8, 9) qui ont un rayon un peu plus grand que le rayon de la surface d'étanchéité (1) de la cuve, et est guidé sur la côté intérieur de la paroi de la cuve par deux tourillons de guidage (13, 14).

3. Appareil de nettoyage suivant la revendication 1, caractérisé en ce que l'unité de nettoyage (5) possède au moins un corps de polissage à la meule (35, 36, 37, 38, 39) susceptible d'être entraîné et appliqué élastiquement sur la surface d'étanchéité (1).

4. Appareil de nettoyage suivant la revendication 1, caractérisé en ce que le chariot (4) dispose de son propre dispositif d'entraînement (18) par moteur électrique.

5. Appareil de nettoyage suivant la revendication 1, caractérisé en ce que l'unité de nettoyage (5) dispose de son propre dispositif d'entraînement (29) par moteur électrique.

6. Appareil de nettoyage suivant la revendication 5, caractérisé en ce que le dispositif d'entraînement (29) par moteur électrique de l'unité de nettoyage (5) ne peut être mis en circuit que lors du déplacement simultané du chariot (4) le long de la surface d'étanchéité (1).

7. Appareil de nettoyage suivant la revendication 5, caractérisé en ce qu'au moins une roue libre (6) du chariot (4) est munie d'un détecteur (62 à 69, 71) de l'avancement du chariot.

8. Appareil de nettoyage suivant la revendication 3, caractérisé en ce que le corps de polissage à la meule (35 à 39) peut tourner, dans le cas d'une surface d'étanchéité (1) plane, autour d'un axe (42, 43, 44, 45) dirigé perpendiculairement à la surface d'étanchéité.

9. Appareil de nettoyage suivant la revendication 8, caractérisé en ce que le corps de polissage à la meule (35 à 39) est monté de manière excentrée sur un disque (32, 34) tournant autour d'un axe dirigé perpendiculairement à la surface d'étanchéité (1).

10. appareil de nettoyage suivant la revendication 9, caractérisé en ce que le corps de polissage à la meule (35 à 39) est monté tournant sur le disque (32, 34).

11. Appareil de nettoyage suivant la revendication 9, caractérisé en ce que, sur le chariot (4), sont montés tournants plusieurs disques (32, 34) accouplés les uns aux autres et entraînés électriquement, et chaque disque possède plusieurs corps de polissage à la meule (35 à 39) entraînés par le mouvement relatif entre le chariot (4) et le disque.

12. Appareil de nettoyage suivant la revendication 1, caractérisé en ce que, sur le chariot (4), sont prévues des buses de projection (58) d'eau de lavage, qui sont dirigées sur la surface d'étanchéité.

13. Appareil de nettoyage suivant la revendication 1, caractérisé en ce que le chariot (4) porte un dispositif repoussant les salissures sur son bord antérieur dans la direction d'entraînement.

14. Appareil de nettoyage suivant les revendications 4 et 5, caractérisé en ce que les dispositifs d'entraînement (18, 29) par moteur électrique sont munis d'une enveloppe et sont conçus pour fonctionner sous l'eau.

15. Appareil de nettoyage suivant la revendication 1, caractérisé en ce que le chariot (4) est muni d'un dispositif de fixation d'un appareil de prise de vue sous l'eau.

16. Appareil de nettoyage suivant la revendication 1, caractérisé en ce que le chariot (4) peut être empêché de tomber par un câble suspendu au-dessus de la surface d'étanchéité (1).

17. Appareil de nettoyage suivant la revendication 13, caractérisé en ce que, sur le dispositif repoussant les salissures (56), est fixée une racle (57) pouvant être appliquée élastiquement sur la surface d'étanchéité (1).


## Claims

1. A cleaning device (3) for the sealing surfaces (1) of a container, wherein a cleaning unit (5) is carried by a movable carriage (4), characterised in that the carriage (4) can be remotely controlled and is movable along the sealing surfaces (1).

2. A cleaning device as claimed in claim 1, characterised in that the carriage (4) is movable over the sealing surface (1) by means of wheels (6, 7, 8, 9) which are set at a running radius which is somewhat greater than the radius of the sealing surface (1) of the container and is guided by two guide pins (13, 14) on the interior of the container wall.

3. A cleaning device as claimed in claim 1, characterised in that the cleaning device (5) comprises at least one drivable abrasive polishing member (35, 36, 37, 38, 39) which is pressed reasliliently against the sealing surface (1).

4. A cleaning device as claimed in claim 1, characterised in that the carriage has its own electric motor drive (18).

5. A cleaning device as claimed in claim 1, characterised in that the cleaning unit (5) has its own electric motor drive (29).

6. A cleaning device as claimed in claim 5, characterised in that the electric motor drive (29) of the cleaning unit (5) can be switched on only when the carriage (4) is simultenously moved along the sealing surface (1).

7. A cleaning device as claimed in claim 5, characterised in that at least one free-running wheel (6) of the carriage (4) is provided with a sensor (62 ot 69, 71) for the advance of the carriage.

8. A cleaning device as claimed in claim 3, characterised in that when the sealing surface (1) is flat, the abrasive polishing member (35 to 39) can be rotated about an axis (42, 43, 44, 45) aligned at right angles to the sealing surface.

9. A cleaning device as claimed in claim 8, characterised in that the abrasive polishing member (35 to 39) is eccentrically mounted on a disc member (32, 34) which can be rotated about an axis aligned at right angles to the sealing surface (1).

10. A cleaning device as claimed in claim 9, characterised in that the abrasive polishing member (35 to 39) is rotatably mounted on the disc member (32, 34).

11. A cleaning device as claimed in claim 9, characterised in that a plurality of electrically driven disc members (32, 34) which are coupled to one another are rotatably mounted on the carriage (4), and each disc member is provided with a plurality of abrasive polishing members (35 to 39) which are driven by the relative movement between the carriage (4) and the disc member.

12. A cleaning device as claimed in claim 1, characterised in that the carriage (4) is provided with spray nozzles (58) for rinsing water which are directed towards the sealing surface.

13. A cleaning device as claimed in claim 1, characterised in that the carriage (4) is provided with a dirt repeller (56) at its front edge considered in the drive direction.

14. A cleaning device as claimed in claims 4 and 5, characterised in that the electric motor drives (18, 29) are encapsulated and equipped for under-water operation.

15. A cleaning device as claimed in claim 1, characterised in that the carriage (4) is equipped with a mounting for an under-water camera.

16. A cleaning device as claimed in claim 1, characaerised in that the carriage (4) is made secure against toppling over by a cable suspended above the sealing surface (1).

17. A Cleaning device as claimed in claim 13, characterised in that a scraper (57) which can be flexibly pressed against the sealing surface (1), is attached to the dirt repeller (56).

FIG 1

0 131 755

FIG 2

FIG 3